# EUROPEAN PATENT SPECIFICATION

(11) **EP 3 251 875 B1**
(45) Date of publication and mention of the grant of the patent: **06.02.2019**
(21) Application number: 15879840.5
(22) Date of filing: 21.12.2015
(51) Int. Cl.: B60C 9/22, B60C 3/04, B60C 9/20

(54) **PNEUMATIC TIRE FOR MOTORCYCLE**
LUFTREIFEN FÜR EIN MOTORRAD
PNEUMATIQUE POUR MOTOCYCLE

(30) Priority: 30.01.2015 JP 2015017297
(43) Date of publication of application: 06.12.2017
(73) Proprietor: Bridgestone Corporation, Tokyo 104-8340 (JP)
(72) Inventor: OSHIMA, Masatomo, Tokyo 104-8340 (JP)
(74) Representative: Oxley, Robin John George
(86) International application number: PCT/JP2015/006363
(87) International publication number: WO 2016/120941

(56) References cited:
- EP-A1- 0 549 311
- EP-A2- 0 453 294
- WO-A1-2010/073055
- JP-A- 2003 260 906
- JP-A- 2005 053 478
- JP-A- 2006 199 074
- JP-A- 2012 131 184
- JP-A- 2012 513 334

## Description

### TECHNICAL FIELD

This disclosure relates to a pneumatic motorcycle tire.

### BACKGROUND

During cornering drive of a motorcycle, a camber angle is applied to the tire inclining with respect to the road surface. In recent motorcycles, due to the improvement of vehicle performance and the improvement of gripping performance of tread rubber of tires, cornering at a large camber angle of around 60° has become possible.

During cornering, including running at the aforementioned large camber angle, in order to further ensure the gripping performance, it is important to increase the footprint area. Conventionally, the footprint area is ensured due to various study on the crown shape of the tread portion, the internal structure of the tire, etc.

Here, in a racing tire capable of running at a high speed of around 300 km/h, in order to suppress the inflation of the tire due to the centrifugal force, ordinarily applied is a structure including spiral belts formed by winding a strip member, which is obtained by coating cords with a rubber, into a spiral shape along the tire circumferential direction.

Further, for example, as disclosed in PTL1 to PTL4, in a pneumatic tire motorcycle, suggested is a technique for reducing the number of spiral belts, to thereby ensure the footprint area, and ensure the gripping performance. Attention is also drawn to the disclosure of EP 0453294 (A2), which shows a tire according to the preamble of claim 1.

### CITATION LIST

### Patent Literature

PTL1 JP2004196148A
PTL2 JPH07290905A
PTL3 JP2006199074A
PTL4 JP2006224935A

### SUMMARY

### (Technical Problem)

However, from the viewpoint of suppressing the inflation of the aforementioned tire, preventing rupture and fracture of the tire, and improving the durability, it was ordinary to set the number of cords of the spiral belt to a certain number or more. Therefore, it was difficult to achieve both the durability and the gripping performance of the tire by adjusting the number of the cords.

This disclosure is to solve the aforementioned problem, and is to provide a pneumatic motorcycle tire achieving both the durability of the tire, and the gripping performance of the tire during cornering, including running at a large camber angle.

### (Solution to Problem)

The subject of this invention is a pneumatic motorcycle tire according to claim 1.

Here, the "applicable rim" is a valid industrial standard for the region in which the tire is produced or used, and refers to a standard rim of an applicable size (the "Measuring Rim" in the STANDARDS MANUAL of ETRTO (the European Tyre and Rim Technical Organization in Europe), and the "Design Rim" in the "YEAR BOOK" of TRA (the Tire and Rim Association, Inc.)) according to the "JATMA Year Book" of the JATMA (Japan Automobile Tire Manufacturers Association) in Japan, the "STANDARDS MANUAL" of ETRTO in Europe, or the "YEAR BOOK" of TRA in the United States of America. Moreover, the "prescribed internal pressure" refers to internal pressures recommended by Bridgestone Corporation for each size of RMR made by Bridgestone Corporation, within a range of 150 kPa to 290 kPa of cold setting.

The "constant interval" refers to substantially constant interval, which is inclusive of the case with scatters due to, e.g., errors in production.

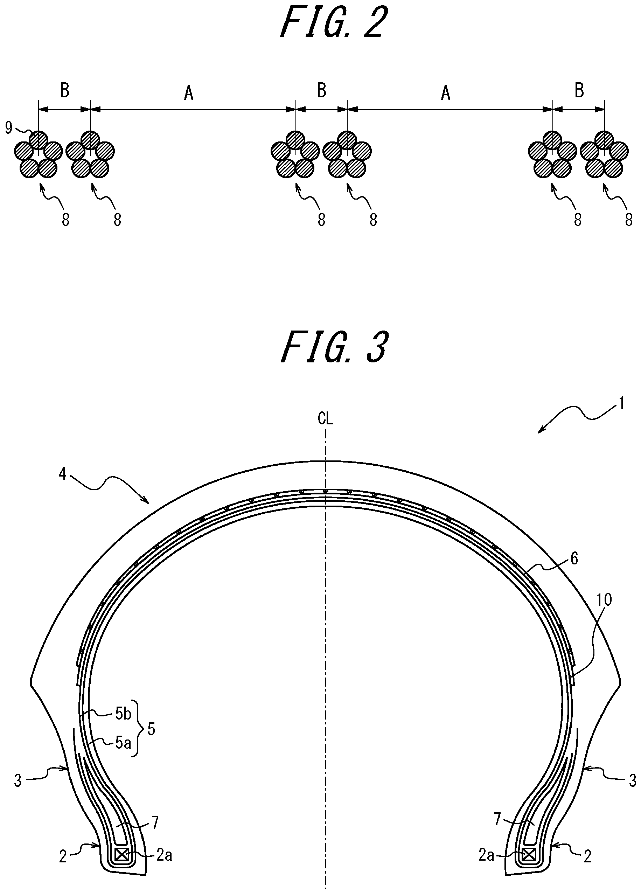

Moreover, the "interval A" refers to an interval between centers of the reinforcing cords, and as illustrated in FIG. 2, refers to the interval between the centers of the reinforcing cords 8 closest to each other in the winding portion of the strip member adjacent in the tire width direction, among the two reinforcing cords 8. The "interval B" refers to, as illustrated in FIG. 2, the interval between the centers of the reinforcing cords 8.

Here, the "reinforcing cord" is inclusive of reinforcing cords formed of one filament, and reinforcing cords formed of two or more filaments (e.g., formed by paralleling, twisting, etc. two or more filaments).

The "rupture strength" refers to a rupture strength obtained by cutting out the spiral belt from the pneumatic motorcycle tire at a predetermined length, a predetermined width and a predetermined thickness, removing the coated rubber, taking out one reinforcing cord at a predetermined length, and measuring the rupture strength of the reinforcing cord. The rupture strength is measured by performing a tension test according to JIS G 3510 and JIS Z 2241, and the maximum tensile load until the reinforcing cord is ruptured is the rupture strength of the steel cord.

### (Advantageous Effect)

According to this disclosure, it is possible to provide a pneumatic motorcycle tire achieving both the durability of the tire, and the gripping performance of the tire during cornering, including running at a large camber angle.

### BRIEF DESCRIPTION OF THE DRAWINGS

FIG. 1 illustrates a tire widthwise cross-sectional view of the pneumatic motorcycle tire according to an embodiment of this disclosure;
FIG. 2 illustrates a schematic arrangement of the reinforcing cords of the spiral belt of the pneumatic motorcycle tire according to an embodiment of this disclosure;
FIG. 3 illustrates a tire widthwise cross-sectional view of the pneumatic motorcycle tire according to another embodiment of this disclosure;
FIG. 4 illustrates a tire widthwise cross-sectional view of the pneumatic motorcycle tire according to another embodiment of this disclosure;
FIG. 5 illustrates a schematic arrangement of the reinforcing cords of the spiral belt of the pneumatic motorcycle tire according to a comparative example; and
FIG. 6 illustrates a schematic arrangement of the reinforcing cords of the spiral belt of the pneumatic motorcycle tire according to a comparative example.

### DETAILED DESCRIPTION

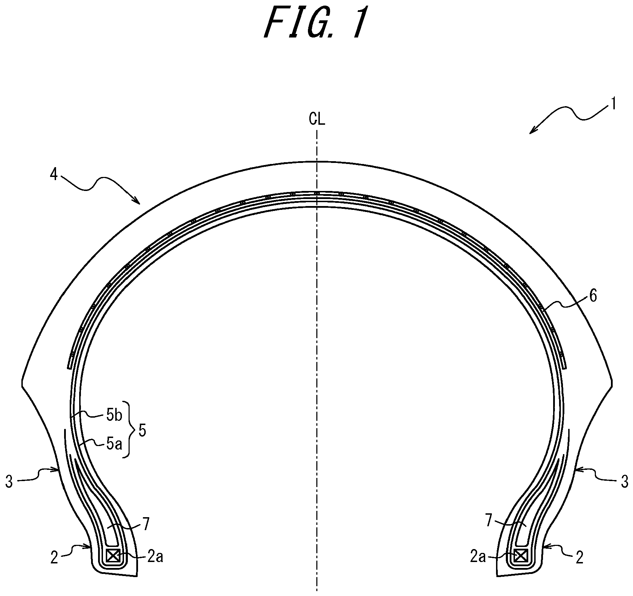

Hereinafter, an embodiment of this disclosure will be described with reference to the drawings. FIG. 1 illustrates a tire widthwise cross section at a standard condition, when the pneumatic motorcycle tire (hereinafter referred to as merely "the tire") is mounted to an applicable rim, applied with a prescribed internal pressure and set to an unloaded condition.

FIG. 1 illustrates a tire widthwise cross section of the pneumatic motorcycle tire (hereinafter referred to as merely "the tire") according to an embodiment of this disclosure. FirsFirst, this tire 1 has an aspect ratio of 60% or more, and as illustrated in FIG. 1, this tire 1 has a pair of bead portions 2, a pair of sidewall portions 3 continuous to the bead portions 2, and a tread portion 4 continuous to the two sidewall portions 3 in a toroidal shape. Moreover, this tire has a carcass 5 formed of one or more (two in the illustrated example) radially arranged carcass plies 5a, 5b, which are formed of a carcass main body portion extending toroidally between a pair of bead cores 2a imbedded in the pair of bead portions 2, and a carcass folded-up portion extending from the carcass main body portion and folded up from a tire widthwise inner side to an outer side. In the illustrated example, the folded-up edges of the folded-up portions of the carcass plies 5a, 5b are arranged at positions shifted from each other in the tire radial direction.

This tire 1 has on a tire radial outer side of the carcass 5 one spiral belt 6 formed by paralleling two reinforcing cords and winding a strip member coated with a rubber along the tire circumferential direction into a spiral shape (so-called double winding). In the illustrated example, on tire radial outer sides of the bead cores 2a, bead fillers 7 with an approximately triangular cross section are arranged. In the example as illustrated in FIG. 2, the reinforcing cords 8 use reinforcing cords obtained by twisting 5 filaments 9, i.e., a twisted structure of 1× 5 (steel cords in this example).

FIG. 2 schematically illustrates the arrangement of the reinforcing cords of the spiral belt 6 of the present embodiment. In the tire of the present embodiment, each lap of the reinforcing cords 8 is located at a constant interval among the entire tire width direction. Namely, in the present embodiment, since the two reinforcing cords 8 use a strip member coated with a rubber, each two reinforcing cords 8 adjacent at an interval B in the tire width direction as a set are located at a constant interval A among the entire tire width direction. Further, in the tire of the present embodiment, the aforementioned interval A between each lap of the reinforcing cords 8 adjacent in the tire width direction is 3.5 mm or more and 6.0 mm or less, and the aforementioned interval B between two reinforcing cords for forming the strip member is 0.8 mm or more and 1.5 mm or less.

Although schematically illustrated in FIG. 2, actually, as illustrated in FIG. 1, the aforementioned intervals A, B are intervals along the periphery of the spiral belt 6 in the tire widthwise cross section at the aforementioned standard conditions.

In the tire of the present embodiment, the rupture strength of one reinforcing cord 8 is 200 N or more and 1000 N or less.

The effect of the pneumatic motorcycle tire of the present embodiment is described in the following.

As a result of intensive study in order to solve the aforementioned problem, we discovered that in a pneumatic motorcycle tire with an aspect ratio of 60% or more, the tire cross section becomes more circular, and it is possible to bear the tension due to the tire internal pressure on the entire carcass (from the bead portions to the tire equatorial plain), and to reduce the tension bore by the spiral belt. Therefore, it is possible to greatly reduce the dependence of the rupture and fracture durability of the tire to the number of spiral belts, and thus it is possible to ensure the rupture and fracture durability of the tire even when the reinforcing cords of the spiral belt are arranged sparsely.

In the aforementioned tire 1, which is an embodiment of this disclosure achieved based on the aforementioned discovery, at the condition that the aspect ratio is 60% or more, by double winding with the rupture strength of one reinforcing cord 8 being 200 N or more, the aforementioned interval A between each lap of the reinforcing cords 8 adjacent in the tire width direction being 6.0 mm or less, and the aforementioned interval B being 1.5 mm or less, it is possible to ensure the durability of the tire even if the aforementioned interval A is increased at some degree within this range (e.g., the interval A is sparse as 6.0 mm).

Further, in the tire of the present embodiment, since the aforementioned interval A between each lap of the reinforcing cords 8 adjacent in the tire width direction is 3.5 mm or more, and the aforementioned interval B is 0.8 mm or more, the deformation of the reinforcing cord 8 in tire width direction is promoted, and the deformation in the tire radial direction (the deformation causing the so-called buckling phenomenon) is suppressed. Therefore, it is possible to ensure the footprint area and improve the gripping performance.

This is because that if the rupture strength of one reinforcing cord is more than 1000N, there are cases that the flexural rigidity of the cords is excessively high, and the footprint area is reduced.

Further, in the tire of the present embodiment, each lap of the reinforcing cords 8 is located at a constant interval along the periphery of the spiral belt 6 among the entire tire width direction. Therefore, it is possible to prevent density variation of the reinforcing cords 8 among the entire tire width direction, and to effectively obtain the aforementioned effect among the entire tire width direction. In particular, regarding the contacting region when applying a large camber angle of 60° or more, it is possible to increase the footprint area and to ensure the gripping performance.

Further, by setting the aforementioned interval A to 6.0 mm or less, it is possible to improve the feeling of rigidity when running.

As mentioned above, according to the tire of the present embodiment, it is possible to achieve both the durability of the tire, and the gripping performance of the tire during cornering, including running at a large camber angle.

In the pneumatic motorcycle tire of this disclosure, the reinforcing cords 8 are preferably steel cords.

This is because that steel cords with a rupture strength within the aforementioned range have an appropriate flexural rigidity and a low cost.

In the pneumatic motorcycle tire of this disclosure, the aforementioned interval A is more preferably 4.0 mm to 5.0 mm. This is because that by setting the aforementioned interval A to 4.0 mm or more, it is possible to further improve the gripping performance, and by setting the aforementioned interval A to 5.0 mm or less, it is possible to further improve the durability.

Here, in the example as illustrated in FIG. 2, the reinforcing cords 8 use reinforcing cords 8 obtained by twisting 5 filaments 9, i.e., a twisted structure of 1 × 5 (steel cords in this example), while in this disclosure, the twisted structure of the reinforcing cords 8 is not specifically limited, and may use various twisted structures such as 1 × 2, 3 × 3 and the like. In short, in this disclosure, due to the material and the twisted structure of the reinforcing cords 8, the rupture strength of one reinforcing cord 8 is 200 N or more and 1000 N or less.

The pneumatic motorcycle tire of this disclosure preferably has an aspect ratio of 80% or less. This is because that it is possible to ensure basic travelling performance for pneumatic motorcycle tire.

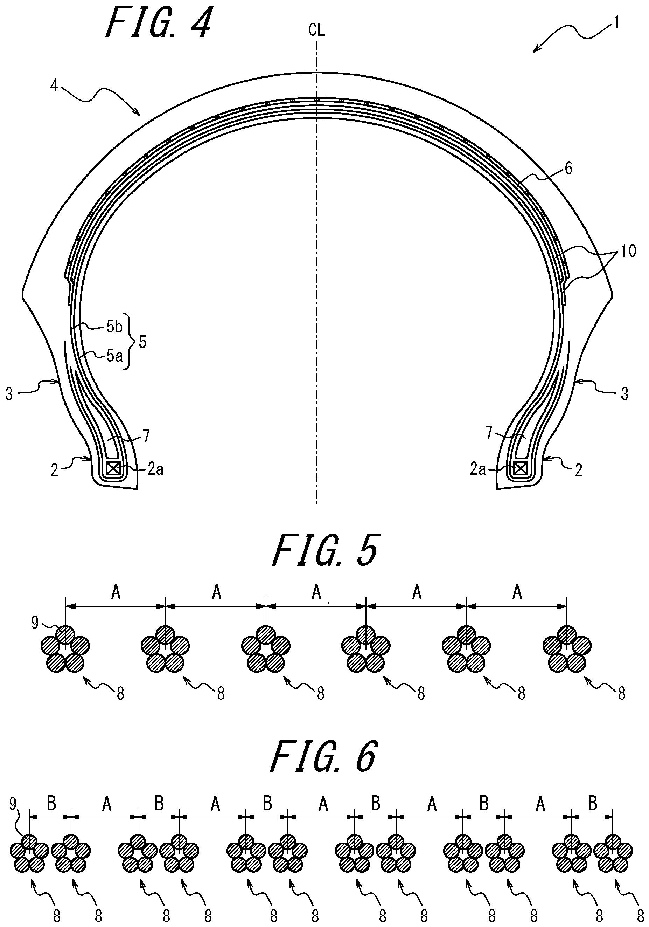

As illustrated in FIGS. 3 and 4, the pneumatic motorcycle tire of this disclosure may have one or more breaker layers 10 formed of a ply of breaker cords on a tire radial outer side of the carcass 5 and on a tire radial inner side of the spiral belt 6. FIG. 3 illustrates the case with one breaker layer 10, and FIG. 4 illustrates the case with two breaker layers 10. In this case, it is possible to achieve the same effect as the aforementioned embodiment. Further, in the example as illustrated in FIG. 3, the tire widthwise width of the breaker layer 10 is larger than the tire widthwise width of the spiral belt 6, and in the example as illustrated in FIG. 4, the breaker layer on the tire radial inner side among the two breaker layers extends until the vicinity of the edge portions of the spiral belt 6, and the breaker layer on the tire radial outer side among the two breaker layers bends to the positions of the edge portions of the breaker layer on the tire radial inner side, and is in contact with the carcass 5 on the tire widthwise side outer than the positions of the edge portions.

### EXAMPLES

### <Example 1>

In order to ensure the effect of this disclosure, racing tires for front wheel according to Examples 1 to 5 and Comparative Examples 1 to 5 were experimentally produced, and tests were performed for evaluating their durability against rupture and fracture, effective footprint area, gripping performance and feeling of rigidity. The dimensions of each tire are as shown in the following Table 1. The methods for evaluating the durability, the effective footprint area, the gripping performance and the feeling of rigidity of the tires are as follows. FIG. 4 schematically illustrates the case of Comparative Example 1, which uses single winding and the interval A is small; and FIG. 5 schematically illustrates the case of Comparative Example 4, which uses double winding and the interval A is small. Further, each tire has a tire structure as illustrated in FIG. 1, except for the dimensions specifically shown in Table 1. Moreover, the reinforcing cords use steel cords.

### <Durability against rupture and fracture>

By mounting each tire with a tire size of 120/600R17 to an applicable rim, gradually injecting air to increase the internal pressure, and measuring the internal pressure at the instant when the tire was ruptured, the durability against rupture and fracture of the tire was evaluated.

The evaluation is shown with relative values with Comparative Example 1 as 100, where a larger value shows an excellent durability. Moreover, a relative value (INDEX) of 70 or more shows a sufficient durability.

### <Effective footprint area>

By mounting each tire with a tire size of 120/600R17 to an applicable rim, and applying a prescribed internal pressure, the footprint area of the tire when applied with a specified load on a smooth surface was evaluated.

The evaluation is shown with relative values with Comparative Example 1 as 100, where a larger value shows a larger effective footprint area.

### <Gripping performance>

By mounting each tire with a tire size of 120/600R17 to an applicable rim, and applying a prescribed internal pressure, the gripping performance when applied with a large camber angle was evaluated via the feeling of a rider when running a closed circuit.

The evaluation is shown with relative values with Comparative Example 1 as 100, where a larger value shows an excellent gripping performance.

### <Feeling of rigidity>

By mounting each tire with a tire size of 120/600R17 to an applicable rim, and applying a prescribed internal pressure, the feeling of rigidity was evaluated via the feeling of a rider when running a closed circuit.

The evaluation is shown with relative values with Comparative Example 1 as 100, where a larger value shows an excellent feeling of rigidity.

These evaluation results are as shown in the following Table 1 together with the dimensions of the tires.

**[Table 1]**

| | Comparative Example 1 | Example 1 | Example 2 | Example 3 | Example 4 | Comparative Example 2 | Comparative Example 3 | Comparative Example 4 | Comparative Example 5 | Example 5 |
|---|---|---|---|---|---|---|---|---|---|---|
| Tire size | 120/600R17 | 120/600R17 | 120/600R17 | 120/600R17 | 120/600R17 | 120/600R17 | 120/600R17 | 120/600R17 | 120/600R17 | 120/600R17 |
| Winding number of spiral belt | 2 | 2 | 2 | 2 | 2 | 2 | 2 | 1 | 1 | 2 |
| Aspect ratio (%) | 70 | 70 | 70 | 70 | 70 | 70 | 70 | 70 | 70 | 70 |
| Rupture strength of reinforcing cord (N) | 580 | 580 | 580 | 580 | 580 | 580 | 580 | 580 | 580 | 200 |
| Interval B (mm) | 1.3 | 1.3 | 1.3 | 1.3 | 1.3 | 1.3 | 1.3 | - | - | 1.3 |
| Interval A (mm) | 2 | 3.5 | 4 | 5 | 6 | 7.5 | 9 | 1.3 | 3.2 | 6 |
| Durability against rupture and fracture (INDEX) | 100 | 100 | 98 | 98 | 95 | 90 | 80 | 105 | 100 | 75 |
| Effective footprint area (INDEX) | 100 | 100 | 102 | 110 | 112 | 115 | 110 | 95 | 102 | 118 |
| Gripping performance (INDEX) | 100 | 102 | 110 | 125 | 115 | 110 | 90 | 95 | 100 | 107 |
| Feeling of rigidity (INDEX) | 100 | 100 | 115 | 117 | 112 | 98 | 90 | 105 | 100 | 95 |

As shown in Table 1, it is understood that as compared to the tires according to Comparative Examples 1 to 5, each tire according to Examples 1 to 5 is capable of ensuring the durability against rupture and fracture, the effective footprint area, the gripping performance and the feeling of rigidity.

### <Example 2>

With respect to a tire for front wheel with an aspect ratio corresponding to the tire size 110/80R17, Example 6 and Comparative Examples 6, 7 were experimentally produced, and subjected the same tests as Example 1. The dimensions of each tire are as shown in the following Table 2 together with the evaluation results.

The evaluations methods are the same as Example 1, while each performance is evaluated with the evaluation results of Comparative Example 6 as 100.

**[Table 2]**

| | Comparative Example 6 | Example 6 | Comparative Example 7 |
|---|---|---|---|
| Tire size | Corresponding to 110/80R17 | Corresponding to 110/80R17 | Corresponding to 110/80R17 |
| Winding number of spiral belt | 2 | 2 | 2 |
| Aspect ratio (%) | 80 | 70 | 70 |
| Rupture strength of reinforcing cord (N) | 580 | 580 | 580 |
| Interval B (mm) | 1.3 | 1.3 | 1.3 |
| Interval A (mm) | 2 | 5 | 9 |
| Durability against rupture and fracture (INDEX) | 100 | 98 | 90 |
| Effective footprint area (INDEX) | 100 | 108 | 109 |
| Gripping performance (INDEX) | 100 | 120 | 95 |
| Feeling of rigidity (INDEX) | 100 | 105 | 95 |

As shown in Table 2, it is understood that as compared to the tires according to Comparative Examples 6, 7, the tire according to Example 6 is capable of ensuring the durability against rupture and fracture, the effective footprint area, the gripping performance and the feeling of rigidity.

### <Example 3>

With respect to a racing tire for front wheel with a tire size 120/600R17, Example 7 and Comparative Examples 8, 9 were experimentally produced, and subjected the same tests as Example 1. The dimensions of each tire are as shown in the following Table 3 together with the evaluation results.

The evaluations methods are the same as Example 1, while each performance is evaluated with the evaluation results of Comparative Example 8 as 100 (90 as for the durability).

**[Table 3]**

| | Comparative Example 8 | Example 7 | Comparative Example 9 |
|---|---|---|---|
| Tire size | 120/600R17 | 120/600R17 | 120/600R17 |
| Winding number of spiral belt | 2 | 2 | 2 |
| Aspect ratio (%) | 60 | 60 | 60 |
| Rupture strength of reinforcing cord (N) | 580 | 580 | 580 |
| Interval B (mm) | 1.3 | 1.3 | 1.3 |
| Interval A (mm) | 2 | 5 | 7 |
| Durability against rupture and fracture (INDEX) | 90 | 80 | 70 |
| Effective footprint area (INDEX) | 100 | 115 | 110 |
| Gripping performance (INDEX) | 100 | 115 | 95 |
| Feeling of rigidity (INDEX) | 100 | 95 | 80 |

As shown in Table 3, it is understood that as compared to the tires according to Comparative Examples 8, 9, the tire according to Example 7 is capable of comprehensively ensuring the durability against rupture and fracture, the effective footprint area, the gripping performance and the feeling of rigidity.

### <Example 4>

With respect to a racing tire for rear wheel with a tire size 180/640R17, Comparative Examples 10, 11 were experimentally produced, and subjected the same tests as Example 1. The dimensions of each tire are as shown in the following Table 4 together with the evaluation results.

The evaluations methods are the same as Example 1, while each performance is evaluated with the evaluation results of Comparative Example 10 as 100 (85 as for the durability).

**[Table 4]**

| | Comparative Example 10 | Comparative Example 11 |
|---|---|---|
| Tire size | 180/640R17 | 180/640R17 |
| Winding number of spiral belt | 2 | 2 |
| Aspect ratio (%) | 55 | 55 |
| Rupture strength of reinforcing cord (N) | 580 | 580 |
| Interval B (mm) | 1.3 | 1.3 |
| Interval A (mm) | 2 | 5 |
| Durability against rupture and fracture (INDEX) | 85 | 65 |
| Effective footprint area (INDEX) | 100 | 110 |
| Gripping performance (INDEX) | 100 | 105 |
| Feeling of rigidity (INDEX) | 100 | 80 |

As shown in Table 4, it is understood that Comparative Example 10, of which the aspect ratio is less than 60% (55%), is capable of ensuring sufficiently durability and feeling of rigidity even when the interval A is 5 mm.

### INDUSTRIAL APPLICABILITY

According to this disclosure, it is possible to provide a pneumatic motorcycle tire achieving both the durability of the tire and the gripping performance of the tire during cornering including running at a large camber angle. This disclosure is preferably used as a racing pneumatic tire for motorcycle for front wheel.

### REFERENCE SIGNS LIST

- 1: pneumatic motorcycle tire
- 2: bead portion
- 2a: bead core
- 3: sidewall portion
- 4: tread portion
- 5: carcass
- 6: spiral belt
- 7: bead filler
- 8: reinforcing cord
- 9: filament
- 10: breaker layer

## Claims

1. A pneumatic motorcycle tire (1) comprising: a spiral belt (6) formed by winding a strip member along a tire circumferential direction into a spiral shape, the strip member obtained by coating two reinforcing cords (8) with a rubber, **characterised in that**:
an aspect ratio of the tire (1) is 60% or more;
in a tire widthwise cross section at a standard condition, when the tire (1) is mounted to an applicable rim, applied with a prescribed internal pressure and set to an unloaded condition, each lap of the reinforcing cords (8) is located at a constant interval along a periphery of the spiral belt (6) among the entire tire width direction;
in the tire widthwise cross section at the standard condition, an interval A along the periphery of the spiral belt (6) between each lap of the reinforcing cords (8) adjacent in the tire width direction is 3.5 mm or more and 6.0 mm or less, said interval A being the interval between the centers of the reinforcing cords closest to each other in the winding portion of the strip member adjacent in the tire width direction, among the two reinforcing cords;
in the tire widthwise cross section at the standard condition, an interval B along the periphery of the spiral belt (6) between the two centers of the reinforcing cords (8) for forming the strip member is 0.8 mm or more and 1.5 mm or less; and
a rupture strength of one of the reinforcing cords (8) is 200 N or more and 1000 N or less.

2. The pneumatic motorcycle tire (1) according to claim 1, wherein:
the reinforcing cords (8) are steel cords.

## Patentansprüche

1. Motorradluftreifen (1), umfassend : einen Spiralgürtel (6) welcher gebildet wird durch Wickeln eines Streifenelements längs einer Reifenumfangsrichtung in eine Spiralform, wobei das Streifenelement durch Beschichten zweier Verstärkungskords (8) mit Kautschuk erhalten wird, **dadurch gekennzeichnet, dass**:
ein Aspektverhälnis des Reifens (1) 60% oder mehr beträgt;
in einem Reifenbreitenquerschnitt, in einem Standardzustand, wenn der Reifen (1) auf einer geeigneten Felge montiert ist, mit einem vorschriftsmäßigen Innendruck versehen ist, und auf einen unbelasteten Zustand eingestellt wird, jede Wicklung der Verstärkungskords (8) in einem regelmäßigen Abstand entlang eines Umfangs des Spiralgürtels (6) innerhalb der gesamten Reifenbreitenrichtung angeordnet ist;
in einem Reifenbreitenquerschnitt, in einem Standardzustand, ein Abstand A entlang des Umfangs des Spiralgürtels (6), zwischen jeder Wicklung der Verstärkungskords (8) die in der Reifenbreitenrichtung benachbart sind, 3,5 mm oder mehr und 6,0 mm oder weniger beträgt, wobei der Abstand A der Abstand zwischen den Mittelpunkten der Verstärkungskords ist, die einander im gewickelten Abschnitt des Streifenelements am nächsten und in Reifenbreitenrichtung benachbart sind, der beiden Verstärkungskords;
im Reifenbreitenquerschnitt, in einem Standardzustand, ein Abstand B entlang des Umfangs des Spiralgürtels (6) zwischen den zwei Mittelpunkten der Verstärkungskords (8) zur Bildung des Streifenelements 0,8 mm oder mehr und 1,5 mm oder weniger beträgt; und
eine Bruchfestigkeit eines der Verstärkungskords (8) 200 N oder mehr oder 1000 N oder weniger beträgt.

2. Motorradluftreifen (1) nach Anspruch 1, wobei:
die Verstärkungskords (8) Stahlkords sind.

## Revendications

1. Bandage pneumatique de cyclomoteur (1) comprenant : une ceinture en spirale (6) formée en enroulant un élément de gainage le long d'une direction circonférentielle du bandage en une forme de spirale, l'élément de gainage étant obtenu en recouvrant deux cordons de renforcement (8) avec un caoutchouc, **caractérisé en ce que** :
un rapport d'aspect du bandage (1) est de 60% ou plus ;
dans une section transversale en largeur du bandage en condition standard, lorsque le bandage (1) est monté sur jante applicable, appliqué avec une pression interne prescrite et établi selon une condition sans charge, chaque boucle des cordons de renforcement (8) est située à un intervalle constant le long d'une périphérie de la ceinture en spirale (6) dans le sens de la largeur du bandage entier ;
dans une section transversale en largeur du bandage en condition standard, un intervalle A le long de la périphérie de la ceinture en spirale (6) entre chaque boucle des cordons de renforcement (8) de manière adjacente dans le sens de la largeur du bandage est de 3,5 mm ou plus et de 6,0 mm ou moins, ledit intervalle A étant l'intervalle entre les centres des cordons de renforcement les plus proches les uns des autres dans la partie d'enroulement de l'élément de gainage de manière adjacente dans le sens de la largeur du bandage, parmi les deux cordons de renforcements ;
dans la section transversale en largeur du bandage en condition standard, un intervalle B le long de la périphérie de la ceinture en spirale (6) entre les deux centres des cordons de renforcements (8) servant à former l'élément de gainage est de 0,8 mm ou plus et 1,5 mm ou moins ; et
une force de rupture d'un des cordons de renforcement (8) est de 200 N ou plus et de 1000 N ou moins.

2. Bandage pneumatique de cyclomoteur (1) selon la revendication 1, dans lequel :
les cordons de renforcement (8) sont des cordons en acier.
